# EUROPEAN PATENT SPECIFICATION

(11) **EP 2 521 741 B1**
(45) Date of publication and mention of the grant of the patent: **19.12.2018**
(21) Application number: 11702295.4
(22) Date of filing: 07.01.2011
(51) Int. Cl.: C08F 8/00, F16D 25/12, F16J 1/00

(54) **ETHYLENE-ACRYLIC BONDED PISTON WITHOUT OVEN POST CURING**
ETHYLEN-ACRYL-GEBUNDENER KOLBEN OHNE OFENNACHHÄRTUNG
PISTON LIÉ PAR POLYMÈRE ÉTHYLÈNE-ACRYLIQUE SANS POST-DURCISSEMENT AU FOUR

(30) Priority: 08.01.2010 US 293307 P
(43) Date of publication of application: 14.11.2012
(73) Proprietor: Tenneco Inc., Lake Forest, IL 60045 (US)
(72) Inventor: HOLLIDAY, Samuel, Roger, Ann Arbor MI 48103 (US)
(74) Representative: Becker Kurig Straus
(86) International application number: PCT/US2011/020480
(87) International publication number: WO 2011/085173

(56) References cited:
- EP-A1- 2 103 850
- Anonymous: "SKF selects Vamac® for GM automatic transmission seals", AutoFocus - News of high performance elastomer solutions in automotive, no. 7 December 2008 (2008-12), XP002633216, Retrieved from the Internet: URL:http://www.dupontelastomers.com/autofo cus/a7/af7.asp?article=SKF [retrieved on 2011-04-14]
- Anonymous: "A Review of Fast-Cure Systems for Vamac® Elastomers", Dupont Performance Elastomers, 2 January 2008 (2008-01-02), pages 1-14, XP002633217, Retrieved from the Internet: URL:http://www.dupontelastomers.com/litera ture/Vamac/B4F0D147CCB127AE8525738A0055B6D E.pdf [retrieved on 2011-04-14]

## Description

### BACKGROUND OF THE INVENTION

### 1. Field of the Invention

The present invention relates to an elastomer suitable for coupling to a metal material of an automatic transmission piston, and a method of manufacturing the same.

### 2. Description of the Prior Art

Automatic transmission pistons are typically used to hydraulically engage and activate clutches, gearshifts, brake bands, and to perform other mechanical operations. Automatic transmission pistons must be strong, reliable, and have a long service life because failure of such a piston can lead to failure of the entire transmission. Therefore, a rubber or elastomer ring is often disposed around a metal component of the piston for sealing fluid between the piston and a cylinder or shaft along which the piston travels, such as disclosed by EP2103850. The elastomer seals provide high resistance to frictional wear for improved service life and contribute to the overall strength of the piston.

An existing automatic transmission piston having excellent strength, reliability, and service life is Federal-Mogul's UNIPISTON®, which is single piece, bonded, and sealed. The single piece design provides a reduced number of leak paths, improved reliability, and a more compact design, compared to multi-piece designs. However, the process of forming the automatic transmission piston requires significant time and manufacturing costs. The process typically includes forming a metal base, preparing an elastomer, compression or injection molding the elastomer to the metal base, oven post curing the piston, and various other steps. The numerous process steps, time, and related manufacturing costs hinder the production of reliable automatic transmission pistons.

### SUMMARY OF THE INVENTION

One aspect of the invention provides a piston for use in an automatic trasmission as defined in claim 1, comprising a cylindrical portion formed of a metal material and an elastomer coupled to the cylindrical portion. The elastomer includes an ethylene-acrylic polymer in an amount of 25 wt. % to 75 wt. % and a curing agent in an amount of at least 0.5 wt. %, based on the total weight of the elastomer. The ethylene-acrylic polymer includes methyl acrylate in an amount of 40 wt. % to 70 wt. % and an ethylene monomer in an amount of 20 wt. % to 60 wt. %, based on the total weight of the ethylene-acrylic polymer. Said elastomer includes amide cross-links and imide cross-links in amount of 0% to 5% based on the total amount of cross-links of the elastomer. The elastomer is cured by exposing the elastomer to a temperature of at least 100°C continuously for a single period of time. The elastomer is cured without exposing the elastomer to a temperature of at least 100°C continuously for a second period of time.

The present invention is also directed towards a method of forming the piston. The method includes providing an elastomer including an ethylene-acrylic polymer in an amount of 25 wt. % to 75 wt. % and a curing agent in an amount of at least 0.5 wt. %, based on the total weight of the elastomer, wherein the ethylene-acrylic polymer includes methyl acrylate in an amount of 40 wt. % to 70 wt. % and ethylene monomer in an amount of 20 wt. % to 60 wt. %, based on the total weight of the ethylene-acrylic polymer. The method next includes coupling the elastomer to a cylindrical portion formed of a metal material. The coupling step includes curing the elastomer. The curing step includes exposing the elastomer to a temperature of at least 100°C continuously for a single period of time. The piston is formed without exposing the elastomer to a temperature of at least 100°C continuously for a second period of time.

The single-piece bonded piston is formed without an oven post curing step, which includes the step of exposing the elastomer to a temperature of at least 100°C continuously for a second period of time, after coupling the elastomer to the cylindrical portion. During the step of coupling the elastomer to the cylindrical portion, sufficient cross-linking of the elastomer occurs to provide strength, heat resistance, and other physical properties suitable for use of the piston in an automatic transmission application, for example to hydraulically engage clutches to activate a gearshift. The elastomer formed without an oven post curing step provides a lower wear rate and a greater life expectancy than comparative elastomers, which are formed with a post curing step.

The method of forming the piston provides significant manufacturing cost savings, compared to other methods of forming single-piece bonded pistons that require a post curing step. The method also provides a reduced environmental footprint, including a significant reduction in CO₂ emissions and natural gas consumption, compared to method including a post curing step.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a perspective view of a piston of a first embodiment;
Figure 2 is an enlarged fragmentary cross sectional view of the piston of Figure 1 taken along line 2-2.
Figure 3 is a perspective view of a piston of a second embodiment; and
Figure 4 is a perspective view of a piston of a second embodiment.

### DETAILED DESCRIPTION OF THE INVENTION

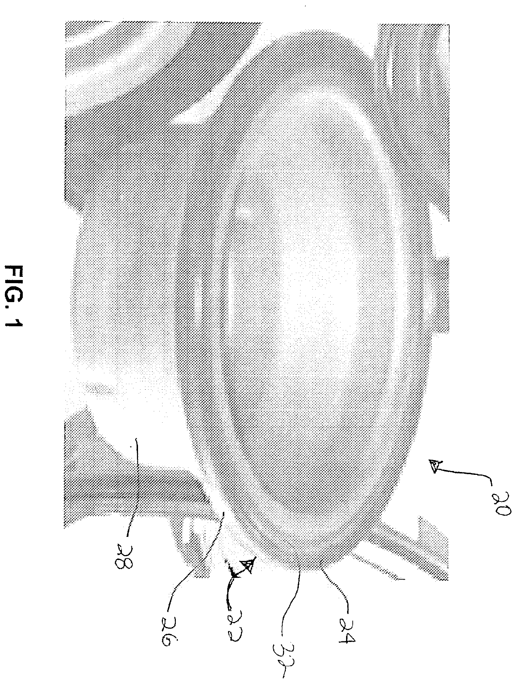

An exemplary piston **20** for an automatic transmission includes a cylindrical portion **22** formed of a metal material and an elastomer **24** coupled to the cylindrical portion **22** is shown in Figure 1. The method of manufacturing the piston **20** includes coupling the elastomer to the cylindrical portion **22** without a post curing step.

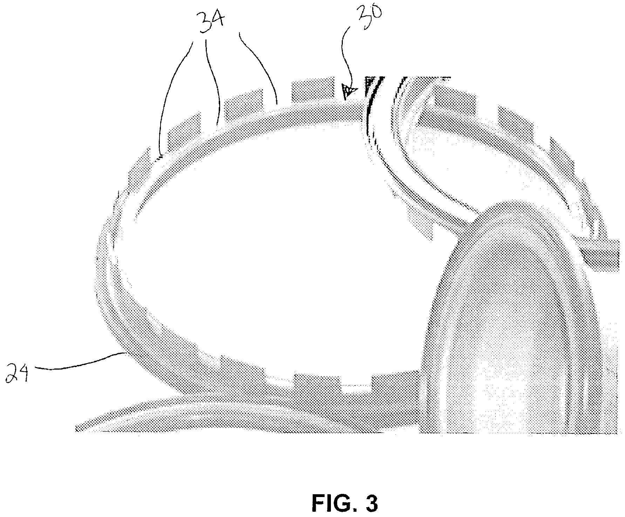

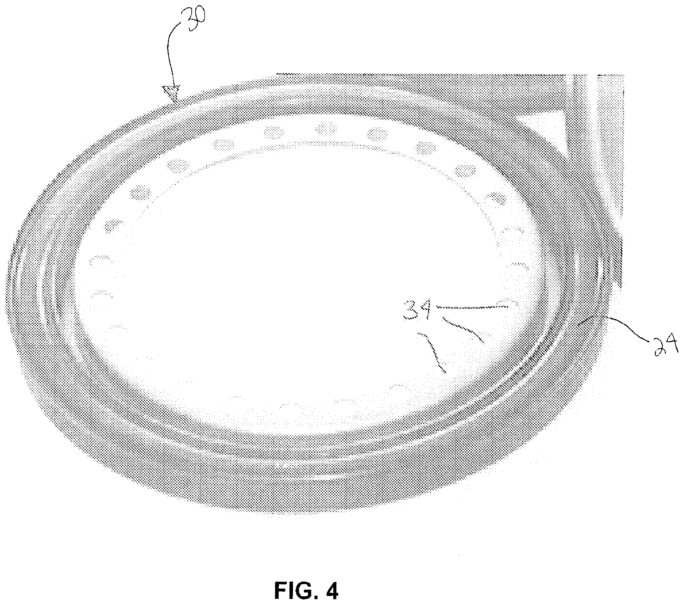

The cylindrical portion **22** of the piston **20** is formed of a metal material, such as Steel 1010. The cylindrical portion **22** can also be formed of other types of steel, aluminum, an aluminum alloy, or another metal material. The cylindrical portion **22** of the piston **20** can include a crown **26** and skirt **28** encompassing a center opening, as shown in Figure 1. The cylindrical portion **22** can also include a cylindrical ring **30**, as shown in Figures 3 and 4, or other designs suitable for an automatic transmission system. The cylindrical portion **22** typically includes a top surface, an inner surface, and an outer surface.

The cylindrical portion **22** can include at least one groove **32** formed therein, as shown in Figure 1, which can be used to direct lubricating oil or hydraulic fluid to predetermined locations, or for other purposes. The groove **32** of the cylindrical portion **22** can extend axially into and around the circumference of the piston **20.** The cylindrical portion **22** can include at least one of the grooves **32** extending radially into the piston **20**, or a plurality of grooves **32** extending axially into the piston **20** and spaced from one another around the circumference of the piston **20.** The cylindrical portion **22** can also include at least one cutout **34** formed therein. For example, the cylindrical portion **22** can include a plurality of the cutouts **34** extending axially into the piston **20** and spaced from one another around the circumference of the piston **20**, as shown in Figure 4. The cutouts **34** can also extend radially into the piston **20**, as shown in Figure 3.

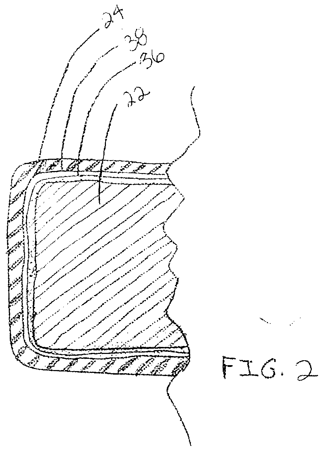

The cylindrical portion **22** can be coated with a conversion coating **36**, such as a calcium-modified zinc phosphate conversion coating, as shown in Figure 2. The conversion coating provides some surface roughness and increases the surface area of the metal cylindrical portion **22.** An adhesive **38**, such as organosilane coupling agent, can be disposed on the conversion coating, as shown in Figure 2. The conversion coating helps carry the adhesive on the metal cylindrical portion **22** and allows for some mechanical interlocking between the elastomer and the metal cylindrical portion **22.**

The elastomer is coupled to the cylindrical portion **22** of the piston **20**, typically around the circumference of the cylindrical portion **22.** The elastomer can be disposed on the cylindrical portion **22** and over the adhesive and the conversion coating. The elastomer can be coupled to the outer surface, inner surface, top surface, or portions of all the surfaces of the cylindrical portion **22.** The elastomer is typically disposed in locations subject to high pressure, friction, and wear, and thus the location of the elastomer can change depending on the design of the cylindrical portion **22** and the specific application of the piston **20.** The elastomer is coupled to the piston **20**, and the piston **20** is formed without a posting cure step, which will be discussed further below.

The elastomer comprises an ethylene-acrylic polymer and a curing agent. The elastomer also typically includes fillers, several processing aids and antidegradants. The (wt. %) weight percent of each component of the elastomer is measured when the elastomer is in an un-cured state, which is before the elastomer is coupled to the metal cylindrical portion **22** of the piston **20**, i.e. before compression molding, injection molding, or bonding.

The elastomer includes the ethylene-acrylic polymer in an amount of 25 wt. % to 75 wt. %, preferably 35 wt. % to 65 wt.%, and more preferably 40 wt. % to 50 wt.%, based on the total weight of the elastomer.

The ethylene-acrylic polymer can includes methyl acrylate (C₄H₆O₂), ethylene monomer C₂H₄. Preferably, the ethylene-acrylic polymer includes the methyl acrylate, the ethylene monomer, and a cure site monomer. In one embodiment, the ethylene-acrylic polymer is referred to as a terpolymer of the methyl acrylate, the ethylene monomer, and the cure site monomer. The methyl acrylate is present in an amount of 40 wt. % to 70 wt. %, or 45 wt. % to 65 wt. %, or 50 wt. % to 60 wt. %, based on the total weight of the ethylene-acrylic polymer. The ethylene monomer is present in an amount of 20 wt. % to 60 wt. %, or 25 wt. % to 55 wt. %, or 35 wt. % to 50 wt. %, based on the total weight of the ethylene-acrylic polymer. The cure site monomer is present in an amount up to 10 wt. %, or 0.1 wt. % to 8 wt. %, or 0.5 wt. % to 5 wt. %, based on the total weight of the ethylene-acrylic polymer.

The cure site monomer of the ethylene-acrylic polymer is preferably acidic. In one embodiment, the cure site monomer has the following chemical structure: 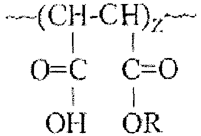 wherein X, Y, and Z are independently selected from an integer ranging from 1 to 1,000,000; and each R is independently selected from a group comprising hydrogen or a hydrocarbon chain of any length.

The elastomer includes the filer, typically carbon black, in an amount of 20 wt. % to about 70 wt. %, or 30 wt. % to 50 wt. %, or 35 wt. % to 45 wt. %, based on the total weight of the elastomer. In one preferred embodiment, the carbon black meets the ASTM D grade N550 specification.

The elastomer also includes the curing agent in an amount of at least 0.5 wt. %, or about 0.5 wt. % to 10 wt. %, or 0.5 wt. % to 5 wt. %, or 0.5 wt. % to 1 wt. %, based on the total weight of the elastomer. In one preferred embodiment, the curing agent is hexamethylene diamine, or hexamethylenediamine carbamate. Alternatively, the curing agent can include one or more another components. The curing agent is used to promote the cross-linking.

In addition to the ethylene-acrylic polymer, carbon black, and curing agent, the elastomer preferred includes additional components, such as process aids, antidegradants, accelerators, and other fillers. The additional components are typically present in a total amount up to about 25 wt. %, or 1 wt. % to 20 wt. %, or 5 wt. % to 15 wt. %, based on the total weight of the elastomer.

The process aids of the elastomer typically includes plasticizers in an amount up to about 10 wt. %. In one embodiment, the elastomer includes an ether-ester plasticizer. Other process aids often used include stearic acid in an amount of 0.3% to 2 wt. %; polyoxyethlyene octadecyl ether phosphate in an amount of 0.3% to 1 wt.%; 1-octadecanamine in an amount of 0.3 wt. % to 1 wt. %; sorbitan monstearate in an amount up to 2.5 wt. %; bis(N-butyl)Sebacate in an amount up to 4 wt. %; and a tertiary amine complex in an amount up to 2.5 wt. %, based on the total weight of the elastomer.

A preferred antidegradant of the elastomer is substituted diphenlylamine antioxidant in an amount up to 2 wt.%, based on the total weight of the elastomer. A preferred filler, in addition to the carbon black, is precipitated hydrated amorphous silica in an amount up to 15 wt. %, based on the total weight of the elastomer. A preferred accelerator of the elastomer is N,N' di-o-tolyguanidine in an amount up to about 2.5 wt. %, based on the total weight of the elastomer. Table 1 includes an exemplary composition of the elastomer.

**Table 1**

| Component | Wt. %* |
|---|---|
| Ethylene-acrylic polymer | 45.7 |
| carbon black filler (meeting the ASTM D 1765 grade N550 specification) | 41.2 |
| ether-ester plasticizer | 3.4 |
| precipitated hydrated amorphous silica | 1.4 |
| substituted diphenlylamine antioxidant | 0.9 |
| stearic acid | 0.9 |
| polyoxyethlyene octadecyl ether phosphate | 0.9 |
| 1-octadecanamine | 0.5 |
| sorbitan monstearate | 1.4 |
| N,N'di-o-tolyguanidine | 1.8 |
| bis(n-butyl)sebacate | 1.4 |
| hexamethylenediamine carbamate | 0.9 |

| | |
|---|---|
| * wt. % of the elastomer before coupling to the cylindrical portion **22**, based on the total weight of the elastomer. | |

The elastomer is cured during the step of coupling the elastomer to the cylindrical portion 22, without a post curing step. The elastomer is cured by exposing the elastomer to a temperature of at least 100°C continuously for a single period of time and is cured without exposing the elastomer to a temperature of at least 100°C continuously for a second period of time.

After the elastomer is coupled to the piston **20** and cured, the elastomer includes amide cross-links. The amide cross-links are formed during the process of coupling the elastomer to the piston **20**, such as during compression molding. The elastomer typically includes little to no imide cross-links, which would be formed during a post curing step. In one embodiment, the elastomer includes less than 5%, or less than 1% imide cross-links, based on the total amount of cross-links of the elsatomer. The cross-link composition and amount is determined immediately after coupling the elastomer to the cylindrical portion **22** and allowing the elastomer to cool to ambient temperature. The cross-link composition and amount is measured before using the piston **20** in an automotive transmission or another engine application wherein the piston **20** is exposed to high temperatures. The cross-link composition and amount is measured before using the piston **20** in an automotive transmission because additional cross-link rearrangement or formation may occur during such use of the piston **20** at the high temperatures. The amide cross-links provide the elastomer with a cross-link density and strength sufficient for use in an automatic transmission application. Since the cross-linking occurs when the elastomer is coupled to the piston **20**, the cross-link composition and density is measured after the elastomer is coupled to the piston **20.**

The cross-link density of the elastomer can be determined by a solvent swell test, wherein the solvent swell index of the elastomer is measured. The solvent swell test includes placing a sample of the elastomer in a solvent at a temperature of 25°C for a period of 72 hours. The sample of the elastomer is obtained after the elastomer has been coupled to the metal cylindrical portion **22.** The solvent swell index is determined by the following equation: (weight of the solvent absorbed ÷ weight of the elastomer sample) x 100. The solvent swell index of the elastomer bonded to the piston **20** without an oven post curing step indicates the cross-link density of the elastomer is sufficient for use in an automotive application, such as an automatic transmission application. An additional post curing step does not provide a significant increase the cross-link density of the elastomer.

The piston **20** including the elastomer having the composition described above also has sufficient tensile strength, tensile modulus, and heat resistance for use in an automotive application, such as an automatic transmission application. For example, the piston **20** can be used to hydraulically engage clutches to activate gearshift.

The method of forming the piston **20** first includes providing an elastomer including an ethylene-acrylic polymer in an amount of 25 wt. % to 75 wt. %, and a curing agent in an amount of at least 0.5 wt. %, based on the total weight of the elastomer. The ethylene-acrylic polymer includes methyl acrylate in an amount of 40 wt. % to 70 wt. % and ethylene monomer in an amount of 20 wt. % to 60 wt. %, based on the total weight of the ethylene-acrylic polymer. Next, the method includes coupling the elastomer to a cylindrical portion **22** of a piston **20.** The coupling occurs at a temperature of at least 100°C to provide cross-linking in an amount sufficient for use of the elastomer in an automatic transmission engine. The elastomer is cured during the coupling step. Sufficient cross-linking and other desirable properties are achieved during the coupling step, and thus method does not include a post curing step after the elastomer is coupled to the cylindrical portion **22.**

An example of the method of forming the piston **20** first includes mixing the elastomer in an internal rubber mixer, such as a Banbury mixer, or an open mill. The method typically includes two passes through the Banbury mixer. During the first pass through the mixer, the method includes setting the mixer to a speed of about 24 rpm. The method next includes adding the substituted diphenlylamine antioxidant, stearic acid, ether-ester plasticizer, 1-octadecanamine, and sorbitan monstearate to the mixer while continuing to mix at about 24 rpm to form a first mixture.

Next, the ethylene-acrylic polymer, along with the carbon black are added to the first mixture and mixed at about 24 rpm. After the ethylene-acrylic polymer and carbon black are added to the mixture, the mixing speed is lowered while continuing to mix for about five minutes or until the mixture reaches a temperature of about 105°C. Next, the method includes increasing the mixing speed and sweeping the mixer.

After the mixer is swept, the method includes lowering the mixing speed while continuing to mix until the temperature reaches about 105°C. Next, the method includes adding plasticizer and silica to the first mixture while increasing the mixing speed to about 36 rpm. After increasing the mixing speed to about 36 rpm, the mixing speed is lowered again while continuing to mix for about 45 seconds. The first mixture is then lowered or dropped from the mixer onto a mill. The first mixture is rolled into sheets and stored for the second pass through the mixer and further processing.

The second pass through the mixer includes setting the mixer to a speed of about 24 rpm again and mixing one half of the first mixture from the first pass through the mixer at about 24 rpm. The method next includes adding the N,N' di-o-tolyguanidine and the hexamethylenediamine carbamate to the first mixture to form a second mixture. After the N,N' di-o-tolyguanidine and the hexamethylenediamine carbamate are added, the other half of the first mixture from the first pass is added to the mixer. The method next includes lowering the mixing speed while mixing the first mixture and the second mixture together for about 30 seconds to form a final mixture. The final mixture of elastomer is lowered or dropped out of the mixer, rolled into sheets, and stored in an un-vulcanized or un-cured state for further processing. Alternatively, the method of forming the elastomer includes different, additional, or fewer steps than those described above.

The elastomer may be coupled to the piston **20** by a variety of methods, but typically is coupled by a compression molding or injection molding process. The uncured elastomer is prepared for the compression or injection molding process by first testing the elastomer for proper quality. The wt. % of each component is measured at this time. For compression molding, the method includes cutting the elastomer into pieces of suitable size and shape. The cutting is performed by an extruder equipped with a rotating knife blade on the end, or another suitable method. A batch of the elastomer is loaded into the extruder, a tube of the elastomer is extruded, and the rotating knife on the end of the extruder cuts the extruded elastomer into ring-shaped pre-forms for compression molding. Alternatively, the elastomer is cut into granules or strips for injection molding.

The cylindrical portion **22** of the piston **20** is prepared for the compression or injection molding process in parallel with the preparation of the elastomer, and may be prepared by a variety of methods. For example, the cylindrical portion **22** is formed by stamping a coil of strip steel, such as Steel 1010. Next, the stamped steel cylindrical portion **22** is coated with the conversion coating, such as a calcium-modified zinc phosphate conversion coating. As stated above, the conversion coating provides some surface roughness and increases the surface area of the steel cylindrical portion **22.** Next, the adhesive, such as organosilane coupling agent, is applied over the conversion coating. As stated above, the conversion coating helps carry the adhesive on the metal cylindrical portion **22** and allows for some mechanical interlocking between the elastomer and the metal cylindrical portion **22.**

After the elastomer and the cylindrical portion **22** formed of metal material are prepared, the method typically includes coupling the elastomer to the cylindrical portion **22** at a temperature of at least 100°C, or at least 150°C, or at least 180°C, such as by compression or injection molding, and without a curing step after the elastomer is coupled to the piston **20.**

For compression molding, the elastomer coupled to the cylindrical portion **22** is placed in a compression molding press. The cylindrical portion **22** is placed in an open mold, and the uncured elastomer prep is placed on the cylindrical portion **22** in the mold. The location of the elastomer on the cylindrical portion **22** may vary, depending on the dimensions of the cylindrical portion **22** and the intended application of the piston **20** in the automatic transmission. Next, the method includes closing the molding press and exposing the cylindrical portion **22** and elastomer to a temperature of at least 100°C, or at least 150°C, or at least 180°C, and a high pressure. In the example method, the cylindrical portion **22** and elastomer are exposed to a temperature reaching about 190°C in the molding press. The elastomer completes vulcanization or curing in the molding press, which occurs after enough time has passed and a high enough temperature has been reached. After the elastomer is cured, the molding press is opened. The time elapsed from closing the press to opening the press is typically two to five minutes, but can be more or less, depending on the temperature of the molding press, the chemical reaction rate of the particular batch of elastomer, and the thickness of the elastomer and cylindrical portion **22** being molded. The elastomer becomes chemically bonded to the cylindrical portion **22** when curing or vulcanization occurs in the compression mold. After the vulcanization occurs, the molding press is opened and the bonded piston **20** is removed from the press to cool for further processing.

Alternatively, instead of the compression molding process, the method can include an injection molding process for coupling the elastomer to the cylindrical portion **22.** In this case, the cylindrical portion is placed in a mold of an injection molding machine. The elastomer is formed into granules. The elastomer granules are fed into a hopper of the injection molding machine, forced into the mold, and coupled to the cylindrical portion in the mold. The elastomer cools and hardens to the cylindrical portion, and is then removed from the mold for further processing.

As stated above, the elastomer cures during the coupling step and achieves sufficient cross-linking, strength, and other desirable physical and chemical properties. The curing step includes exposing the elastomer and the cylindrical portion to a temperature of at least 100°C continuously for a single period of time. After the coupling step, but before using the piston **20** in an automotive application, the piston **20** is maintained at a temperature less than 100°C, preferably less than 20°C. The method does not include a post or second curing step, after the elastomer is coupled to the cylindrical portion, before using the piston **20** in an engine application. The piston **20** is not subject to a post curing step, which would typically include exposing the elastomer and cylindrical portion to a temperature of at least 100°C for a second period of time.

As stated above, the cross-lining of the elastomer is substantially completed during the coupling step, which provides the elastomer with strength and other physical properties sufficient for use in an automotive application, such as automatic transmission. During the coupling step, the methyl acrylate, the ethylene, and the cure site monomer of the ethylene-acrylic polymer react with the curing agent, such as hexamethylene diamine, to provide amide cross-links in the elastomer. In one embodiment, when hexamethylene diamine is used as the curing agent, the following Mechanism 1 occurs during the coupling step to form the amide cross-links. 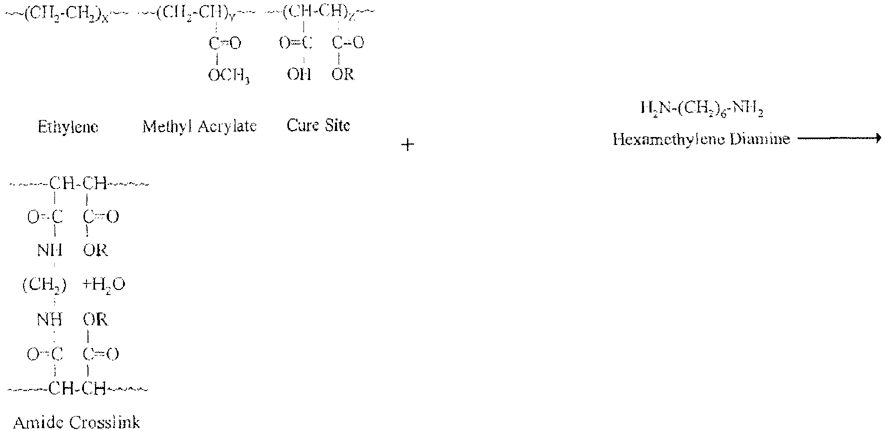 wherein X, Y, and Z are independent selected from an integer ranging from 1 to 1,000,000; and each R is independently selected from a group comprising hydrogen or a hydrocarbon chain of any length. After the elastomer and the cylindrical portion **22** formed of metal material are prepared, the method typically includes coupling the elastomer to the cylindrical portion **22** at a temperature of at least 100°C, or at least 150°C, or at least 180°C, such as by compression or injection molding, and without a curing step after the elastomer is coupled to the piston **20.**

A sufficient cross-link density is achieved when the amide cross-links between the polymer chains are formed during the coupling step. The process of forming the elastomer includes the cross-linking in an amount sufficient to provide about 70% to 90%, typically 80% of the elastomer's potential tensile strength, without a post curing step. The strength of the elastomer's potential tensile strength, without a post curing step. The strength of the elastomer without a post curing step is sufficient for use in an automatic transmission. The adidtiolnal strength that could be provided during a post curing step is not required. For example, the elastomer formed without the post curing step may have a tensile strength of 13 MPa, and the potential tensile strength that could be achieved with a post curing step is 15.6 MPa.

After coupling the elastomer to the cylindrical portion, such as by one of the molding processes described above, the elastomer is trimmed to a desired shape. For example, the piston **20** may have portions of the elastomer, such as lips, extending past the cylindrical portion, which are trimmed to align with the edges of the cylindrical portion. A trimming cell is typically used to trim the lips of the elastomer. After trimming the elastomer, additional hardware, such as pins, springs, and check valves, may be added to the piston **20**, depending on the application of the piston **20.** After adding the additional hardware, if any, the piston **20** is packaged for shipment to the customer.

As disclosed in the prior art, methods of forming a bonded piston typically include an oven post curing step after coupling or molding rubber to a metal piston. As alluded to above, a post curing would typically includes a second curing step, in addition to the curing that occurs during the coupling step. The post curing step would typically take place in an oven or in the presence of another heat source, after the elastomer is coupled to the piston **20.** Post curing is typically conducted in an oven at a temperature of at least 100°C, or at least 150°C, and typically about 180°C, for a period of several hours, typically about four hours.

However, the piston **20** of the present invention is formed without an oven post curing step. The method does not include curing by an intentionally provided source of heat after the elastomer is coupled to the cylindrical portion. The method of the present invention typically includes maintaining the piston **20** at ambient temperature after coupling the elastomer to the cylindrical portion. If any post curing or additional curing of the elastomer occurs after the coupling step and before the piston **20** is used in an automotive application, that curing occurs at ambient temperature, or at a temperature less than 100°C, preferably less than 40°C

### EXPERIMENT 1

An experiment was conducted to test certain physical properties of the elastomer of Table 1. The physical properties tested were those typically relevant to elastomers bonded the metal pistons **20** of automatic transmissions. Such properties oftentimes must meet automotive industry specifications. The tests, procedures, and corresponding test results are listed in Table 2.

**Table 2**

| Test | Procedure | Results |
|---|---|---|
| As Received - Specific Gravity (Z5) | | 1.27 |
| As Received - Hardness (Z1) | ASTM D2240 | 79 |
| As Received - Tensile Strength (Mpa) | ASTM D412 | 13.3 |
| As Received - Ultimate Elongated (%) | ASTM D412 | 217 |
| As Received - Tensile modulus at 100% Elongation (Z6) | ASTM D412 | 8.1 |
| Dry Heat Resistance, 70 Hrs/150°C-Durometer A change (points) | ASTM D573 | 9.6 |
| Dry Heat Resistance, 70 Hrs/150°C - Tensile Strength change (%) | ASTM D573 | 19 |
| Dry Heat Resistance, 70 Hrs/150°C - Elongation change (%) | ASTM D573 | -27 |
| IRM #901 Oil, 70 Hrs/150°C - Durometer Change (points) | ASTM D471 | 6 |
| IRM #901 Oil, 70 Hrs/150°C - Tensile Change (%) | ASTM D471 | 23 |
| IRM #901 Oil, 70 Hrs/150°C - Elongation Change (%) | ASTM D471 | -18 |
| IRM #901 Oil, 70 Hrs/150°C - Volume Change (%) | ASTM D471 | -3.7 |
| IRM #901 Oil, 70 Hrs/150°C - Decomposition or Tackiness | ASTM D471 | Pass |
| IRM #903 Oil, 70 Hrs/150°C (Z3) - Durometer Change (points) | ASTM D471 | -23 |
| IRM #903 Oil, 70 Hrs/150°C (Z3) - Tensile Change (%) | ASTM D471 | -1 |
| IRM #903 Oil, 70 Hrs/150°C (Z3) - Elongation Change (%) | ASTM D471 | -18 |
| IRM #903 Oil, 70 Hrs/150°C (Z3) - Volume Change (%) | ASTM D471 | 38.8 |
| IRM #903 Oil, 70 Hrs/150°C (Z3) - Decomposition or Tackiness | ASTM D471 | Pass |
| Compression Set, 70 Hrs/150°C (Z4) - Piled Up Specimens | ASTM D395 | 73.6 |
| Fluid Aging, OEM Factory Fill Automatic Transmission Fluid, 70 Hrs/150°C - Durometer Change (points) | N/A | -2.8 |
| Fluid Aging, OEM Factory Fill Automatic Transmission Fluid, 70 Hrs/150°C - Tensile Change (%) | N/A | 18.8 |
| Fluid Aging, OEM Factory Fill Automatic Transmission Fluid, 70 Hrs/150°C - Elongation Change (%) | N/A | -24.2 |
| Fluid Aging, OEM Factory Fill Automatic Transmission Fluid, 70 Hrs/150°C - Volume Change (%) | N/A | 6.3 |
| Fluid Aging, OEM Factory Fill Automatic Transmission Fluid, 1008 Hrs/150°C - Durometer Change (points) | N/A | 4 |
| Fluid Aging, OEM Factory Fill Automatic Transmission Fluid, 1008 Hrs/150°C - Tensile Change (%) | N/A | 26 |
| Fluid Aging, OEM Factory Fill Automatic Transmission Fluid, 1008 Hrs/150°C - Elongation Change (%) | N/A | -37 |
| Fluid Aging, OEM Factory Fill Automatic Transmission Fluid, 1008 Hrs/150°C - Volume Change (%) | N/A | -6.8 |
| Torque, Rheometer, 240 minutes - (inches/pound) | ASTM D5289 | 29 |
| Solvent Swell Index (%) | | 169 |
| Life Expectancy, 590 psi (cycles to failure) | | 1,711 |
| Wear Rate | | 7-49% less than with post cure |

The test results of Experiment 1 indicate the elastomer, formed without a post curing step, is suitable for use in an automatic transition.

### EXPERIMENT 2

A second experiment was conducted to compare certain physical properties of the elastomer of Table 1, formed without a post curing step, to the physical properties of a comparative elastomer, fonned with a post curing step.

Experiment 2 included coupling the elastomer of Table 1 to a piston **20** in a compression mold. During the step of coupling the elastomer of Table 1 to the piston **20**, Mechanism 1 occurs to form the amide cross-links of the elastomer. 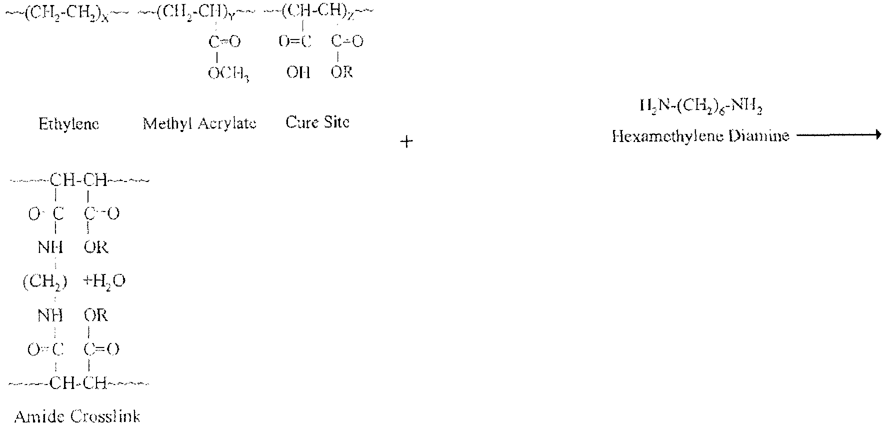 wherein X, Y, and Z are independently selected from an integer ranging from 1 to 1,000,000; each R is independently selected from a group comprising hydrogen or a hydrocarbon chain of any length. The elastomer of Table 1 was then tested, without a post curing step.

Experiment 2 also included coupling the comparative elastomer to the piston in a compression mold. At that point, the comparative elastomer had the same composition as Inventive Table 1, including the amide cross-link. However, after the compression mold, the comparative elastomer was subject to a post curing step. The comparative elastomer coupled to the piston was placed in a curing oven a temperature of about 180°C and maintained at that temperature for 4 hours.

During the post curing step, the amide cross-links slowly rearranged to imide cross-links according to the following Mechanism 2:

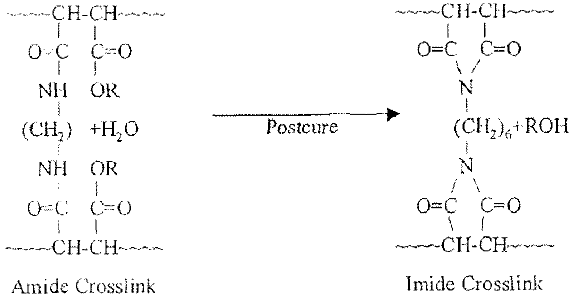

wherein each R is independently selected from a group comprising hydrogen or a hydrocarbon chain of any length. The post-cured comparative elastomer was then ready to be tested.

After the post curing step, the tensile strength, tensile modulus, torque, solvent index, wear rate, and life expectancy of the post-cured elastomer were tested, according to the test procedures described above. Table 3 includes a comparison between the physical properties of elastomer formed without the post curing step and the comparative elastomer formed with the post curing step.

**Table 3**

| Test | Without Post Cure | With Post Cure |
|---|---|---|
| As Received - Tensile Strength (Mpa) | 13 | 16 |
| As Received - Tensile modulus at 100% Elongation (Z6) | 8 | 12 |
| Torque, Rheometer, 240 minutes - (inches/pound) | 29 | 33 |
| Solvent Swell Index, 72 hrs, 25 °C (%) | 169 | 176 |
| Life Expectancy (cycles to failure) | 1,711 | 238 |
| Wear Rate | 7-49% less than with post cure | |

The solvent swell index and torque test results of Experiment 2 indicate that the cross-link density of the elastomer does not significantly increase during the post curing step. The torque test indicates the elastomer only experiences a 14% increase during the post curing step. Experiment 2 also indicates 80% of the elastomer tensile strength and 67% of the tensile modulus is achieved during the coupling step, such as the compression molding. The cross-link density, tensile strength, and tensile modulus achieved without the post curing step provides the elastomer that is sufficient for use in automatic transmission applications.

The life expectancy test was conducted using an extended duration engine test at a pressure of 590 psi. A high pressure stroker was used to determine the number of cycles until failure. The elastomer of Table 1 reached 1,711 cycles until failure, while the comparative elastomer reached only 238 cycles until failure. Thus, Experiment 3 indicated the elastomer of Table 1 had a life expectancy about seven times greater than the life expectancy of the comparative elastomer. Several wear rate tests were also conducted and indicated that the elastomer of Table 1 had about 7% to 49% less wear than the comparative elastomer.

## Claims

1. A piston for use in an automatic transmission, comprising:
a cylindrical portion formed of a metal material;
an elastomer coupled to said cylindrical portion;
said elastomer including an ethylene-acrylic polymer in an amount of 25 wt. % to 75 wt. %, based on the total weight of said elastomer, said ethylene-acrylic polymer including methyl acrylate in an amount of 40 wt. % to 70 wt. % and an ethylene monomer in an amount of 20 wt. % to 60 wt. %, based on the total weight of said ethylene-acrylic polymer;
said elastomer including a curing agent in an amount of at least 0.5 wt. %, based on the total weight of said elastomer;
said elastomer being cured by exposing said elastomer to a temperature of at least 100°C continuously for a single period of time;
said elastomer including amide cross-links;
said elastomer including imide cross-links in an amount of 0 % to 5 %, based on the total amount of cross-links of the elastomer; and
said piston being formed without exposing said elastomer to a temperature of at least 100°C continuously for a second period of time.

2. The piston claim 1 wherein said piston is formed without an oven post curing step after said elastomer is coupled to said cylindrical portion.

3. The piston of claim 1 wherein said ethylene-acrylic polymer includes a cure site monomer in an amount up to 10 wt. %, based on the total weight of said ethylene-acrylic polymer.

4. The piston of claim 3 wherein said cure site monomer of said ethylene-acrylic polymer has a chemical structure of 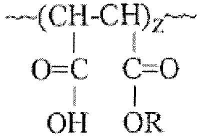 wherein X, Y, and Z are independently selected from an integer ranging from 1 to 1,000,000; and each R is independently selected from a group comprising hydrogen or a hydrocarbon chain of any length.

5. The piston of claim 1 wherein said curing agent includes hexamethylene diamine.

6. The piston of claim 1 wherein said ethylene-acrylic polymer includes said methyl acrylate in an amount of 50 wt. % to 60 wt. %, said ethylene monomer in an amount of 35 wt. % to 50 wt. %, and a cure site monomer being acidic in an amount of 0.5 wt. % to 5 wt. %, based on the total weight of said ethylene-acrylic polymer.

7. The piston of claim 1 wherein said elastomer is cured at a temperature of at least 100°C for the single period of time.

8. The piston of claim 1 wherein said elastomer is cured while being coupled to said cylindrical portion.

9. The piston of claim 1 wherein said elastomer includes a tensile strength of 70% to 90% of the potential tensile strength of said elastomer.

10. The piston of claim 1 including a conversion coating disposed on said cylindrical portion; an adhesive disposed on said conversion coating; and said elastomer disposed on said adhesive.

11. The piston of claim 1 wherein said elastomer includes said ethylene-acrylic polymer in an amount of 35 wt. % to 65 wt.%; a filler in an amount of 30 wt. % to 50 wt. %; and said curing agent in an amount of or 0.5 wt. % to 5 wt. %, wherein said curing agent includes hexamethylene diamine.

12. A method of forming a piston for use in an automatic transmission comprising:
providing an elastomer including an ethylene-acrylic polymer in an amount of 25 wt. % to 75 wt. % and a curing agent in an amount of at least 0.5 wt. %, based on the total weight of the elastomer, wherein the ethylene-acrylic polymer includes methyl acrylate in an amount of 40 wt. % to 70 wt. % and ethylene monomer in an amount of 20 wt. % to 60 wt. %, based on the total weight of the ethylene-acrylic polymer;
coupling the elastomer to a cylindrical portion formed of a metal material;
the coupling step including curing the elastomer, wherein the curing includes exposing the elastomer to a temperature of at least 100°C continuously for a single period of time and forming amide cross-links in the elastomer;
the method being without exposing the elastomer to a temperature of at least 100°C continuously for a second period of time; and
forming imide cross-links in the elastomer in an amount of 0% to 5%, based on the total amount of cross-links of the elastomer.

13. The method of claim 12 including no oven post curing step after the coupling step.

14. The method of claim 12 wherein the curing is at a temperature of at least 100°C for the single period of time.

15. The piston of claim 1 wherein said elastomer includes
said ethylene-acrylic polymer in an amount of 40 wt. % to 50 wt. %, said ethylene-acrylic polymer includes said methyl acrylate in an amount of 50 wt. % to 60 wt. %, said ethylene monomer in an amount of 35 wt. % to 50 wt. %, and a cure site monomer in an amount of 0.5 to 5.0 wt. %, based on the total weight of said ethylene-acrylic polymer, and said cure site monomer of said ethylene-acrylic polymer has a chemical structure of 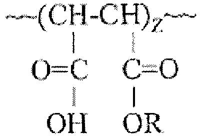 wherein X, Y, and Z are independently selected from an integer ranging from 1 to 1,000,000; and each R is independently selected from a group comprising hydrogen or a hydrocarbon chain of any length;
carbon black in an amount of 35 to 45 wt. %, based on the total weight of said elastomer;
said curing agent in an amount of 0.5 wt. % to 1 wt. % based on the total weight of said elastomer, said curing agent includes at least one of hexamethylene diamine and hexamethylenediamine carbamate;
ether-ester plasticizer in an amount up to 10 wt. %;
stearic acid in an amount of 0.3 wt. % to 2 wt. %;
polyoxyethlyene octadecyl ether phosphate in an amount of 0.3 wt. % to 1 wt. %;
1-octadecanamine in an amount of 0.3 wt. % to 1 wt. %; sorbitan monstearate in an amount up to 2.5 wt. %;
bis(N-butyl)Sebacate in an amount up to 4 wt. %;
a tertiary amine complex in an amount up to 2.5 wt. %;
substituted diphenlylamine antioxidant in an amount up to 2 wt. %;
precipitated hydrated amorphous silica in an amount up to 15 wt. %; and
N,N' di-o-tolyguanidine in an amount up to about 2.5 wt. %, based on the total weight of the elastomer.

## Patentansprüche

1. Kolben zur Verwendung in einem Automatikgetriebe, der Folgendes umfasst:
einen zylindrischen Abschnitt, der aus einem Metallmaterial gebildet ist;
ein Elastomer, das mit dem zylindrischen Abschnitt verbunden ist;
wobei das Elastomer ein Ethylenacrylpolymer in einer Menge von 25 Gew.-% bis 75 Gew.-%, bezogen auf das Gesamtgewicht des Elastomers, enthält, wobei das Ethylenacrylpolymer Methylacrylat in einer Menge von 40 Gew.-% bis 70 Gew.-% und ein Ethylenmonomer in einer Menge von 20 Gew.-% bis 60 Gew.-%, bezogen auf das Gesamtgewicht des Ethylenacrylpolymers, enthält;
wobei das Elastomer ein Härtungsmittel in einer Menge von mindestens 0,5 Gew.-%, bezogen auf das Gesamtgewicht des Elastomers, enthält;
wobei das Elastomer durch kontinuierliches Aussetzen des Elastomers gegenüber einer Temperatur von mindestens 100 °C über einen einzelnen Zeitraum gehärtet wird;
wobei das Elastomer Amidquerverbindungen enthält;
wobei das Elastomer Imidquerverbindungen in einer Menge von 0% bis 5%, bezogen auf die Gesamtmenge an Querverbindungen des Elastomers, enthält; und
wobei der Kolben gebildet wird, ohne das Elastomer kontinuierlich einer Temperatur von mindestens 100 °C über einen zweiten Zeitraum auszusetzen.

2. Kolben nach Anspruch 1, wobei der Kolben ohne einen Ofennachhärtungsschritt gebildet wird, nachdem das Elastomer mit dem zylindrischen Abschnitt verbunden wird.

3. Kolben nach Anspruch 1, wobei das Ethylenacrylpolymer ein Härtungsstellenmonomer in einer Menge von bis zu 10 Gew.-%, bezogen auf das Gesamtgewicht des Ethylenacrylpolymers, enthält.

4. Kolben nach Anspruch 3, wobei das Härtungsstellenmonomer des Ethylenacrylpolymers die folgende chemische Struktur aufweist 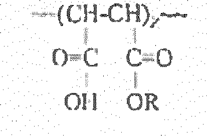 worin X, Y und Z unabhängig aus einer ganzen Zahl im Bereich von 1 bis 1.000.000 ausgewählt sind; und jedes R unabhängig aus einer Gruppe ausgewählt ist, die Wasserstoff oder eine Kohlenwasserstoffkette beliebiger Länge umfasst.

5. Kolben nach Anspruch 1, wobei das Härtungsmittel Hexamethylendiamin enthält.

6. Kolben nach Anspruch 1, wobei das Ethylenacrylpolymer das Methylacrylat in einer Menge von 50 Gew.-% bis 60 Gew.-%, das Ethylenmonomer in einer Menge von 35 Gew.-% bis 50 Gew. -% und ein Härtungsstellenmonomer, das sauer ist, in einer Menge von 0,5 Gew.-% bis 5 Gew.-%, bezogen auf das Gesamtgewicht des Ethylenacrylpolymers, enthält.

7. Kolben nach Anspruch 1, wobei das Elastomer bei einer Temperatur von mindestens 100 °C über den einzelnen Zeitraum gehärtet wird.

8. Kolben nach Anspruch 1, wobei das Elastomer gehärtet wird, während es mit dem zylindrischen Abschnitt verbunden wird.

9. Kolben nach Anspruch 1, wobei das Elastomer eine Zugfestigkeit von 70% bis 90% der potenziellen Zugfestigkeit des Elastomers aufweist.

10. Kolben nach Anspruch 1, der eine auf dem zylindrischen Abschnitt angeordnete Konversionsschicht, einen auf der Konversionsschicht angeordneten Klebstoff und das auf dem Klebstoff angeordnete Elastomer aufweist.

11. Kolben nach Anspruch 1, wobei das Elastomer das Ethylenacrylpolymer in einer Menge von 35 Gew.-% bis 65 Gew.-%, einen Füllstoff in einer Menge von 30 Gew.-% bis 50 Gew.-% und das Härtungsmittel in einer Menge von 0,5 Gew.-% bis 5 Gew.-% enthält, wobei das Härtungsmittel Hexamethylendiamin enthält.

12. Verfahren zum Bilden eines Kolbens zur Verwendung in einem Automatikgetriebe, das Folgendes umfasst:
Bereitstellen eines Elastomers, das ein Ethylenacrylpolymer in einer Menge von 25 Gew.-% bis 75 Gew.-% und ein Härtungsmittel in einer Menge von 0,5 Gew.-%, bezogen auf das Gesamtgewicht des Elastomers, enthält, wobei das Ethylenacrylpolymer Methylacrylat in einer Menge von 40 Gew.-% bis 70 Gew.-% und Ethylenmonomer in einer Menge von 20 Gew.-% bis 60 Gew.-%, bezogen auf das Gesamtgewicht des Ethylenacrylpolymers, enthält;
Verbinden des Elastomers mit einem zylindrischen Abschnitt, der aus einem Metallmaterial gebildet ist;
wobei der Verbindungsschritt das Härten des Elastomers umfasst, wobei das Härten das kontinuierliche Aussetzen des Elastomers gegenüber einer Temperatur von mindestens 100 °C über einen einzelnen Zeitraum und das Bilden von Amidquerverbindungen in dem Elastomer aufweist;
wobei das Verfahren ohne ein kontinuierliches Aussetzen des Elastomers gegenüber einer Temperatur von mindestens 100 °C über einen zweiten Zeitraum auskommt; und
Bilden von Imidquerverbindungen in dem Elastomer in einer Menge von 0 Gew.-% bis 5 Gew.-%, bezogen auf das Gesamtgewicht von Querverbindungen in dem Elastomer.

13. Verfahren nach Anspruch 12, das keinen Ofennachhärtungsschritt nach dem Verbindungsschritt aufweist.

14. Verfahren nach Anspruch 12, wobei das Härten bei einer Temperatur von mindestens 100 °C über den einzelnen Zeitraum erfolgt.

15. Kolben nach Anspruch 1, wobei das Elastomer Folgendes aufweist
das Ethylenacrylpolymer in einer Menge von 40 Gew.-% bis 50 Gew.-%, wobei das Ethylenacrylpolymer das Methylacrylat in einer Menge von 50 Gew.-% bis 60 Gew.-%, das Ethylenmonomer in einer Menge von 35 Gew.-% bis 50 Gew.-% und ein Härtungsstellenmonomer in einer Menge von 0,5 Gew.-% bis 5,0 Gew.-%, bezogen auf das Gesamtgewicht des Ethylenacrylpolymers, enthält, und wobei das Härtungsstellenmonomer des Ethylenacrylpolymers die folgende chemische Struktur aufweist 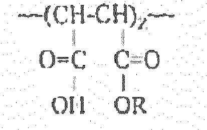
worin X, Y und Z unabhängig aus einer ganzen Zahl im Bereich von 1 bis 1.000.000 ausgewählt sind; und jedes R unabhängig aus einer Gruppe ausgewählt ist, die Wasserstoff oder eine Kohlenwasserstoffkette beliebiger Länge umfasst;
Rußschwarz in einer Menge von 35 bis 45 Gew.-%, bezogen auf das Gesamtgewicht des Elastomers;
das Härtungsmittel in einer Menge von 0,5 Gew.-% bis 1 Gew.-%, bezogen auf das Gesamtgewicht des Elastomers, wobei das Härtungsmittel Hexamethylendiamin und/oder Hexamethylendiamincarbamat enthält;
einen Ether-Ester-Weichmacher in einer Menge von bis zu 10 Gew.-%;
Stearinsäure in einer Menge von 0,3 Gew.-% bis 2 Gew.-% ;
Polyoxyethylenoctadecyletherphosphat in einer Menge von 0,3 Gew.-% bis 1 Gew.-%;
1-Octadecanamin in einer Menge von 0,3 Gew.-% bis 1 Gew.-%;
Sorbitanmonstearat in einer Menge von bis zu 2,5 Gew.-% ;
Bis(N-butyl)sebacat in einer Menge von bis zu 4 Gew.-% ;
einen tertiären Aminkomplex in einer Menge von bis zu 2,5 Gew.-%;
substituiertes Diphenylaminantioxidans in einer Menge von bis zu 2 Gew.-%;
ausgefällte hydrierte amorphe Kieselsäure in einer Menge von bis zu 15 Gew.-%; und
N,N'-Di-o-tolyguanidin in einer Menge von bis zu etwa 2,5 Gew.-%, bezogen auf das Gesamtgewicht des Elastomers.

## Revendications

1. Piston destiné à une utilisation dans une transmission automatique, le piston comprenant :
une partie cylindrique formée d'un matériau métallique ;
un élastomère connecté à ladite partie cylindrique ;
ledit élastomère comprenant un polymère d'éthylène-acrylique dans une quantité comprise entre 25 % en poids et 75 % en poids, en fonction du poids total dudit élastomère, ledit polymère d'éthylène-acrylique comprenant du méthyl acrylate dans une quantité comprise entre 40 % en poids et 70 % en poids et un monomère d'éthylène dans une quantité comprise entre 20 % en poids et 60 % en poids en fonction du poids total dudit polymère d'éthylène-acrylique ;
ledit élastomère comprenant un agent de durcissement dans une quantité d'au moins 0,5 % en poids, en fonction du poids total dudit élastomère ;
ledit élastomère étant durci au moyen de l'exposition dudit élastomère à une température d'au moins 100 °C de manière continue pendant une période de temps unique ;
ledit élastomère comprenant des liaisons de réticulation d'amide ;
ledit élastomère comprenant des liaisons de réticulation d'imides dans une quantité comprise entre 0 % et 5 %, en fonction du poids total des liaisons de réticulation de l'élastomère ; et
ledit piston étant formé sans l'exposition dudit élastomère à une température d'au moins 100 °C de manière continue pendant une seconde période de temps.

2. Piston selon la revendication 1, dans lequel ledit piston est formé sans une étape de post-durcissement au four après que ledit élastomère a été connecté à ladite partie cylindrique.

3. Piston selon la revendication 1, dans lequel ledit polymère d'éthylène-acrylique comprend un monomère de site de durcissement dans une quantité allant jusqu'à 10 % en poids, en fonction du poids total dudit polymère d'éthylène-acrylique.

4. Piston selon la revendication 3, dans lequel ledit monomère de site de durcissement dudit polymère d'éthylène acrylique à la structure chimique de 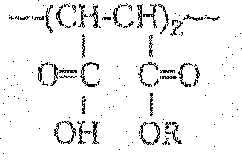 dans laquelle X, Y et Z sont indépendamment choisis parmi un nombre entier compris entre 1 et 1 000 000 ; et chaque R est indépendamment choisi dans un groupe comprenant l'hydrogène ou une chaîne hydrocarbonée de n'importe quelle longueur.

5. Piston selon la revendication 1, dans lequel ledit agent de durcissement comprend de l'hexaméthylène diamine.

6. Piston selon la revendication 1, dans lequel ledit polymère d'éthylène-acrylique comprend ledit méthyl acrylate dans une quantité comprise entre 50 % en poids et 60 % en poids, ledit monomère d'éthylène dans une quantité comprise entre 35 % en poids et 50 % en poids et un monomère de site de durcissement étant acide dans une quantité comprise entre 0,5 % en poids et 5 % en poids, en fonction du poids total dudit polymère d'éthylène-acrylique.

7. Piston selon la revendication 1, dans lequel ledit élastomère est durci à une température d'au moins 100 °C pendant la période de temps unique.

8. Piston selon la revendication 1, dans lequel ledit élastomère est durci tout en étant connecté à ladite partie cylindrique.

9. Piston selon la revendication 1, dans lequel ledit élastomère comprend une force de traction comprise entre 70 % et 90 % de la force de traction potentielle dudit élastomère.

10. Piston selon la revendication 1 comprenant un revêtement de conversion disposée sur ladite partie cylindrique ; un adhésif disposé sur ledit revêtement de conversion ; et ledit élastomère disposé sur ledit adhésif.

11. Piston selon la revendication 1, dans lequel ledit élastomère comprend ledit polymère d'éthylène-acrylique dans une quantité comprise entre 35 % en poids et 65 % en poids ; une charge dans une quantité comprise entre 30 % en poids et 50 % en poids ; et ledit agent de durcissement dans une quantité comprise entre 0,5 % en poids et 5 % en poids, dans lequel ledit agent de durcissement comprend de l'hexaméthylène diamine.

12. Procédé de formation d'un piston destiné à une utilisation dans une transmission automatique comprenant :
la fourniture d'un élastomère comprenant un polymère d'éthylène-acrylique dans une quantité comprise entre 25 % en poids et 75 % en poids et un agent de durcissement dans une quantité d'au moins 0,5 % en poids, en fonction du poids total de l'élastomère, dans lequel le polymère d'éthylène-acrylique comprend du méthyl acrylate dans une quantité comprise entre 40 % en poids et 70 % en poids et un monomère d'éthylène dans une quantité comprise entre 20 % en poids et 60 % en poids, en fonction du poids total du polymère d'éthylène-acrylique ;
le couplage de l'élastomère à une partie cylindrique formée d'un matériau métallique ;
l'étape de couplage comprenant le durcissement de l'élastomère, dans lequel le couplage comprend l'exposition de l'élastomère à une température d'au moins 100 °C de manière continue pendant une unique période de temps et la formation de liaisons de réticulation d'amide dans l'élastomère ;
le procédé se déroulant sans l'exposition de l'élastomère à une température d'au moins 100 °C de manière continue pendant une seconde période de temps ; et
la formation de liaisons de réticulation d'imide dans l'élastomère dans une quantité comprise entre 0 % et 5 %, en fonction de la quantité totale de liaisons de réticulation de l'élastomère.

13. Procédé selon la revendication 12, ne comprenant aucune étape de post-durcissement au four après l'étape de couplage.

14. Procédé selon la revendication 12, dans lequel le durcissement se fait à une température d'au moins 100° C pendant l'unique période de temps.

15. Piston selon la revendication 1, dans lequel ledit élastomère comprend
ledit polymère d'éthylène acrylique dans une quantité comprise entre 40 % en poids et 50 % en poids, ledit polymère d'éthylène acrylique comprend ledit méthyle acrylate dans une quantité comprise entre 50 % en poids et 60 % en poids, le dit monomère d'éthylène dans une quantité comprise entre 35 % poids et 50 % en poids et un monomère de site de durcissement dans une quantité comprise entre 0,5 et 5,0 % en poids, en fonction du poids total dudit polymère d'éthylène acrylique, et le dit monomère de site de durcissement dudit polymère d'éthylène acrylique comporte une structure chimique de 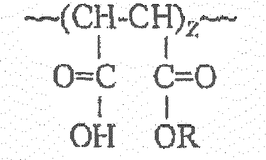
dans laquelle X, Y et Z sont indépendamment choisis parmi un nombre entier valant entre 1 et 1 000 000, et chaque R est indépendamment choisi dans un groupe comprenant de l'hydrogène ou une chaîne hydrocarbonée de n'importe quelle longueur ;
du charbon noir dans une quantité comprise entre 35 et 45 % en poids, en fonction du poids total dudit élastomère ;
ledit agent de durcissement dans une quantité comprise entre 0,5 % en poids et 1 % en poids en fonction du poids total dudit élastomère, ledit agent de durcissement comprend au moins un parmi l'hexaméthylène diamine et le carbamate d'hexaméthylène diamine ;
un plastifiant d'ester-ester dans une quantité allant jusqu'à 10 % en poids ;
de l'acide stéarique dans une quantité comprise entre 0,3 % en poids et 2 % en poids ;
du phosphate de polyoxyéthylène octaldécyle éther dans une quantité comprise entre 0,3 % en poids et 1 % en poids ;
de la 1-octadécanamine dans une quantité comprise entre 0,3 % en poids et 1 % en poids, du sorbitol monostéarate dans une quantité allant jusqu'à 2,5 % en poids ;
du bis(N-butyl)sébacate dans une quantité allant jusqu'à 4 % en poids ;
un complexe d'amine tertiaire dans une quantité allant jusqu'à 2,5 % en poids ;
un antioxydant à base de diphénylamine substituée dans une quantité allant jusqu'à 2 % en poids ;
de la silice amorphe hydratée et précipitée dans une quantité allant jusqu'à 15 % en poids ; et
de la N,N' di-o-tolylguanidine dans une quantité allant jusqu'à environ 2,5 % en poids, en fonction du poids total de l'élastomère.
